Europäisches Patentamt

European Patent Office

Office européen des brevets

(11) Numéro de publication: **0 047 982**
**A1**

## (12) DEMANDE DE BREVET EUROPEEN

(21) Numéro de dépôt: **81107136.4**

(22) Date de dépôt: **10.09.81**

(51) Int. Cl.³: **F 24 F 13/00**
**F 24 F 5/00**

(30) Priorité: **16.09.80 FR 8019905**

(43) Date de publication de la demande:
**24.03.82 Bulletin 82/12**

(84) Etats contractants désignés:
**AT BE CH DE FR GB IT LI LU NL SE**

(71) Demandeur: **NOVELERG Société Anonyme dite:**
**12, rue de la Baume**
**F-75008 Paris(FR)**

(72) Inventeur: **Berthet, Michel**
**3, Domaine de Miremont**
**F-91190 Gif Sur Yvette(FR)**

(72) Inventeur: **Lahitte, Michel**
**145, rue du Mont-Cenis**
**F-75018 Paris(FR)**

(74) Mandataire: **Weinmiller, Jürgen et al,**
**Zeppelinstrasse 63**
**D-8000 München 80(DE)**

(54) **Dispositif pour la commutation et la répartition d'air dans une installation de climatisation pour une habitation.**

(57) Le dispositif pour la commutation et la répartition d'air dans une installation de climatisation et de chauffage d'eau sanitaire pour une habitation (1) comprend un groupe de capteurs solaires à air (11), une serre (10), un organe de stockage thermique (12) et un ventilateur (V1), reliés par une boucle de circulation d'air comportant cinq registres (R1, R2, R3, R4, R5) de commutation. Ce dispositif est caractérisé en ce que les cinq registres (R1, R2, R3, R4, R5), le ventilateur (V1) et un échangeur air/eau (13) sont disposés dans un caisson métallique (19) qui comporte en outre des viroles (21, 22, 23, 24, 25, 26) pour le raccordement aux équipements extérieurs.

FIG. 9

Dispositif pour la commutation et la répartition d'air dans une
installation de climatisation pour une habitation

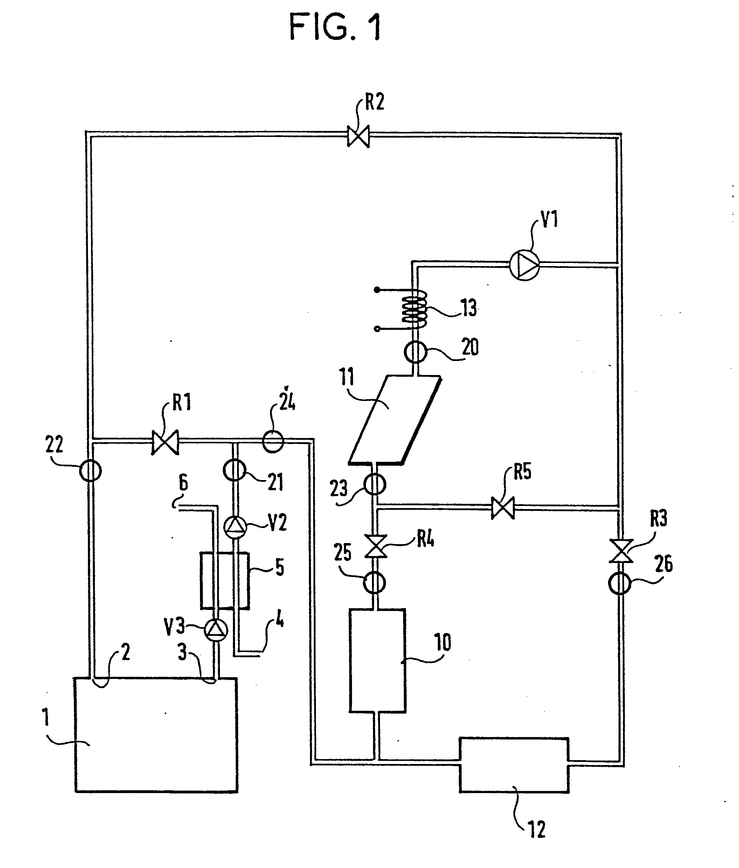

La présente invention concerne un dispositif pour la climatisation de maisons ou d'immeubles d'habitation à l'aide de l'énergie solaire recueillie directement au moyen de capteurs solaires à air. La figure 1 représente un schéma connu d'installation d'un système de climatisation.

La référence 1 désigne le volume à climatiser qui reçoit un air de climatisation par une ouverture 2 et rejette de l'air vicié par une ouverture 3. L'air extérieur, apporté par une canalisation d'entrée 4, peut être préchauffé au moyen d'un échangeur 5 recevant l'air venant de 3 avant d'être injecté dans le système.

L'air vicié de 3 s'échappe par une ouverture 6 après passage dans l'échangeur. Des ventilateurs V2 et V3 assurent respectivement l'aspiration d'air extérieur et le rejet de l'air vicié.

Un registre R1 est disposé sur la canalisation reliant les sorties 2 et 3.

L'énergie solaire est fournie directement à une serre 10 et à des capteurs à air 11. Capteurs et serre sont reliés en série entre eux et avec un dispositif de stockage thermique 12, tel qu'un amas de cailloux. Le circuit dispositif de stockage-serre-capteurs est relié à travers un registre R2 à l'entrée 2.

En outre serre et dispositif de stockage forment une boucle commandée par trois registres R3, R4 et R5. La circulation de l'air circulant dans le circuit capteurs-serre-dispositif de stockage est assurée par un ventilateur V1.

Un échangeur 13 pour l'eau chaude sanitaire est disposé sur le circuit.

Plusieurs cas de fonctionnement du système peuvent se présenter et sont contrôlés automatiquement par un système de régulation agissant sur les registres et les ventilateurs.

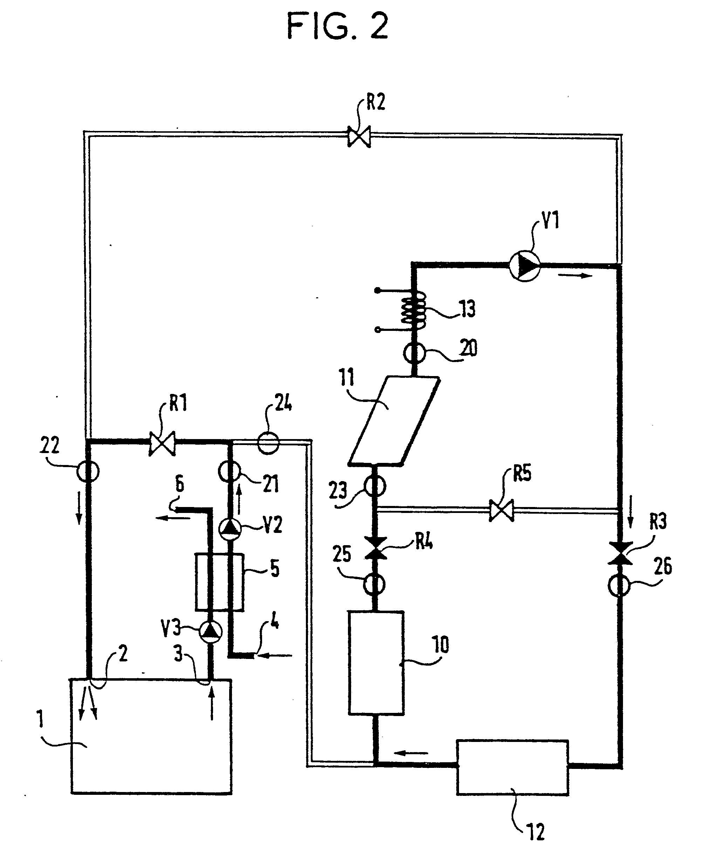

Les figures 2 à 7 représentent les divers cas possibles et on a figuré en traits pleins les canalisations actives..

1er cas : Pas de besoin de chauffage :

a) l'ensoleillement est suffisant c'est la configuration de la figure 2 qui s'applique : on stocke de l'énergie.

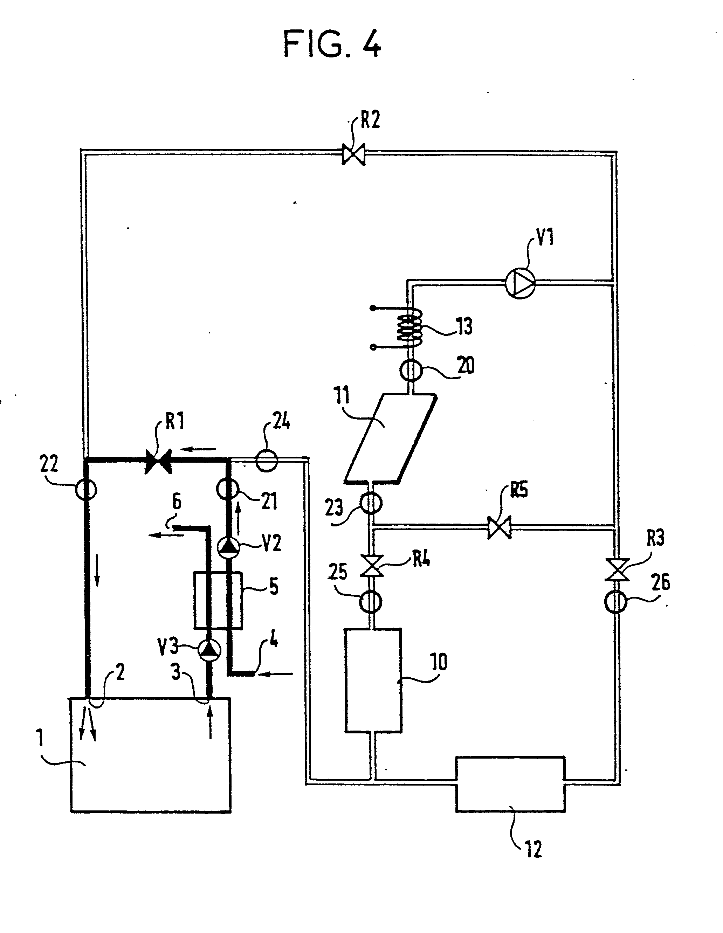

b) l'ensoleillement est insuffisant on se contente de ventiler selon le schéma de la figure 4 2ème cas : Il y a des besoins de chauffage :

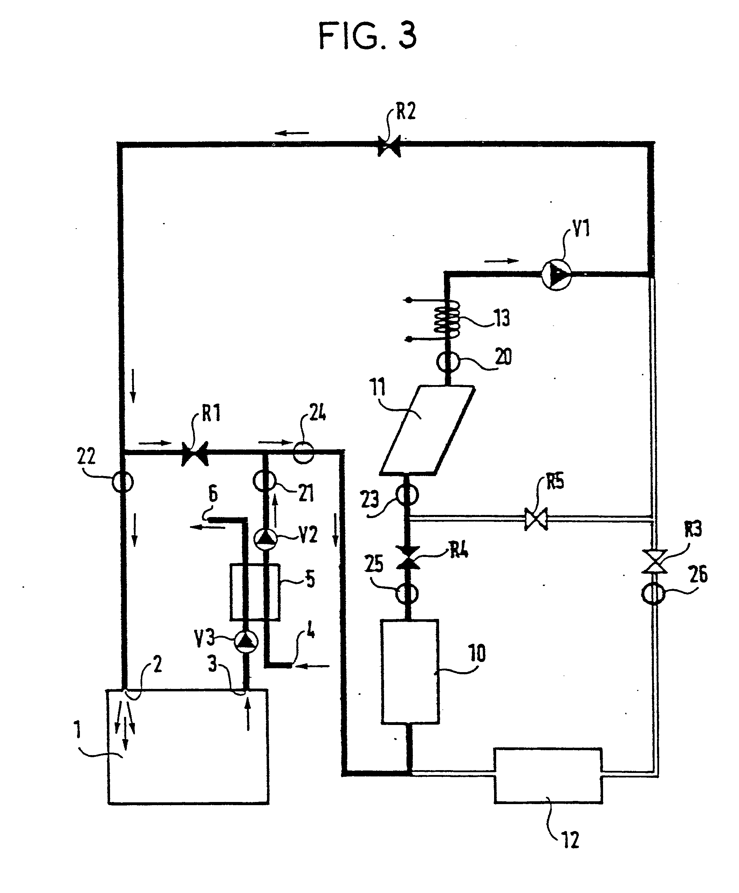

a) l'ensoleillement est suffisant  on chauffe directement selon le schéma de la figure 3, alterné avec stockage si l'apport de calories est excédentaire.

b) l'ensoleillement est insuffisant :

b1) le stock est vide : on ventile selon le schéma de la figure 4

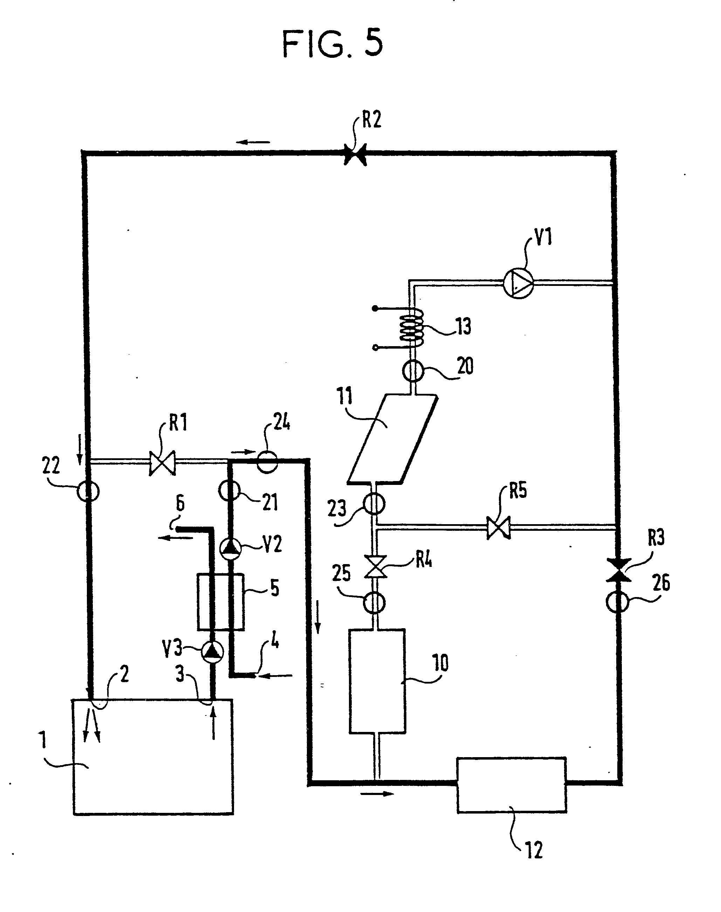

b2) le stock est plein et on l'utilise selon le schéma de la figure 5

3ème cas : on veut produire de l'eau chaude sanitaire

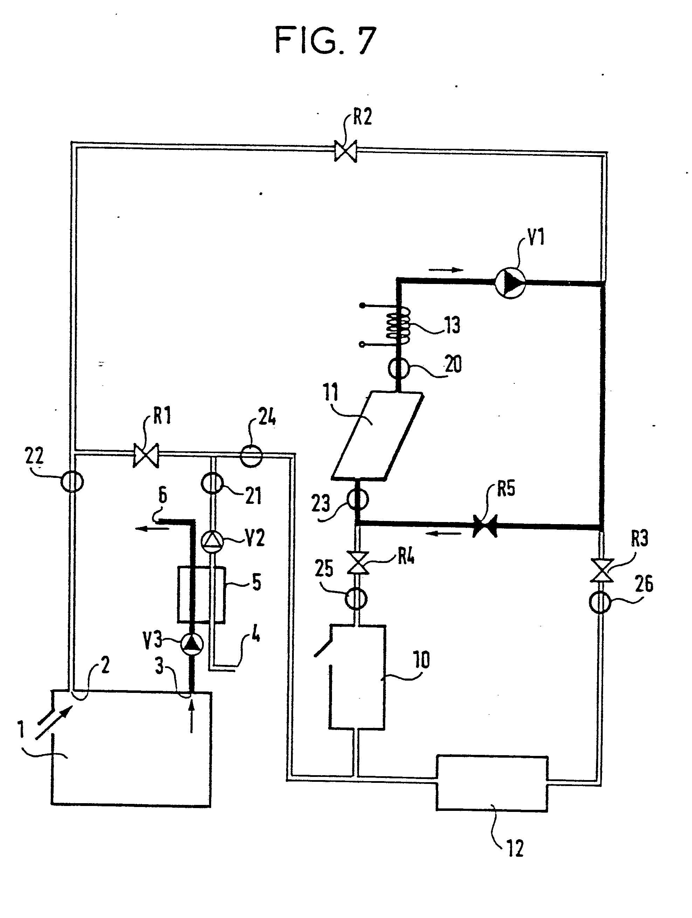

a) en été, lorsque l'ensoleillement est suffisant, on utilise le schéma de la figure 7

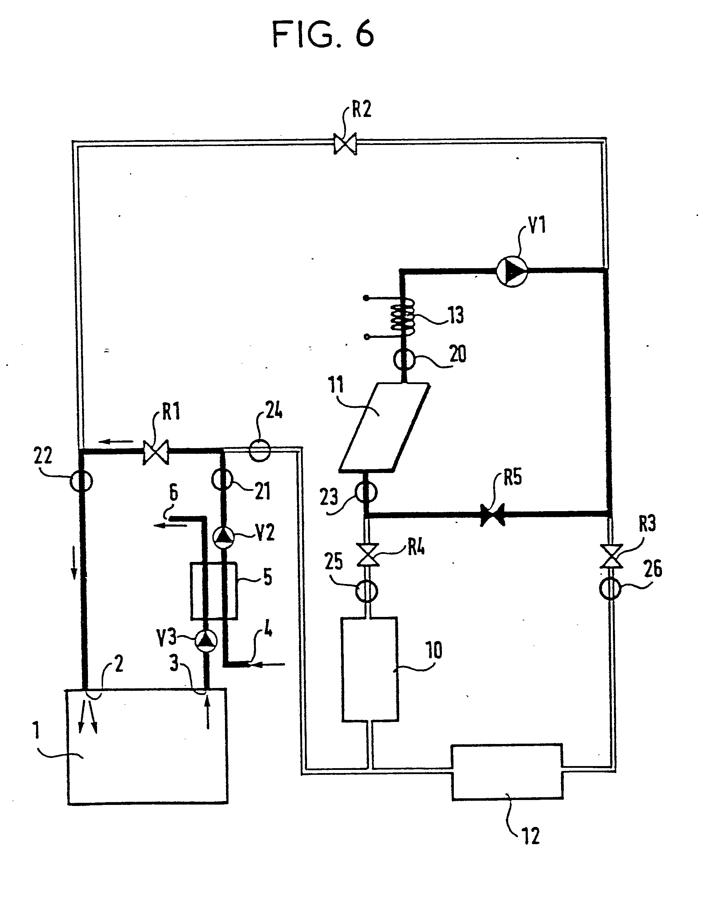

b) en saison de chauffe, on utilise le schéma de la figure 6 lorsque l'ensoleillement est suffisant et le stock plein.

Bien entendu, les schémas utilisés peuvent subir des variantes et n'ont été donnés ici que pour introduire le sujet de l'invention.

On remarquera que quel que soit le schéma utilisés, il existe dans tous les cas, la nécessité d'utiliser un ou plusieurs ventilateurs, plusieurs registres, ces organes étant reliés entre eux et possédant un certain nombre d'entrées et de sorties.

On connaît, notamment par le brevet français n° 71 04259 des ensembles de conditionnement d'air, compacts et modulaires, mais aucun d'eux, n'a jusqu'à présent regroupé toutes les fonctions nécessaires à l'habitation.

L'invention a pour but de réaliser un ensemble unique de commutation et de répartition des flux d'air, permettant d'obtenir les cinq fonctions suivantes :

- stockage des calories d'origine solaire

0047982

- 3 -

- de stockage desdits calories
- chauffage direct de l'habitation (sans stockage)
- ventilation (renouvelement de l'air d'habitation)
- production d'eau chaude sanitaire.

Un autre but de l'invention est de réaliser un ensemble ayant un nombre minimal de composants pour assurer les fonctions précitées de manière à obtenir le rendement maximal.

L'invention a pour objet un dispositif pour la commutation et la répartition d'air dans une installation de climatisation et de chauffage d'eau sanitaire pour une habitation, ladite installation comprenant un groupe de capteurs solaires à air, une serre, un organe de stockage thermique et un ventilateur, reliés par une boucle de circulation d'air comportant cinq registres de commutation, caractérisé en ce que les cinq registres, le ventilateur et un échangeur air/eau sont disposés dans un caisson métallique qui comporte en outre des viroles pour le raccordement aux équipements extérieurs.

Avantageusement, le caisson comprend un premier bloc comportant une entrée reliée à la sortie des capteurs solaires et, successivement un filtre, l'échangeur de chaleur air/eau et le ventilateur, ledit ventilateur refoulant dans une seconde partie du caisson comportant cinq compartiments, et les cinq registres .

Un premier registre est disposé de manière à obturer la communication entre un premier compartiment relié au côté froid de l'organe de stockage par une première virole et à l'entrée d'air de ventilation et un deuxième compartiment comprenant une seconde virole reliée à l'habitation.

Un second registre est disposé entre le deuxième compartiment et le ventilateur.

Un troisième registre est disposé entre le ventilateur et une troisième virole reliée au côté chaud de l'organe de stockage.

Un quatrième registre est disposé entre un troisième compartiment muni d'une quatrième virole reliée à la serre et un quatrième compartiment muni d'une cinquième virole reliée à l'entrée des capteurs solaires.

Un cinquième registre est disposé entre le ventilateur et le quatrième compartiment.

En variante le quatrième registre est disposé sur la virole d'entrée venant des capteurs.

L'invention sera précisée par la description donnée ci-après d'un mode préféré de réalisation de l'invention, en référence au dessin annexé dans lequel :

- les figures 1 à 7 représentent un système connu de climatisation selon plusieurs hypothèses de fonctionnement,

- la figure 8 est une vue en perspective d'un dispositif selon l'invention,

- la figure 9 est une vue en coupe transversale du dispositif selon la figure 8,

- la figure 10 est une vue en coupe selon la ligne X-X de la figure 9,

- et la figure 11 une coupe selon la ligne XI-XI de la figure 9.

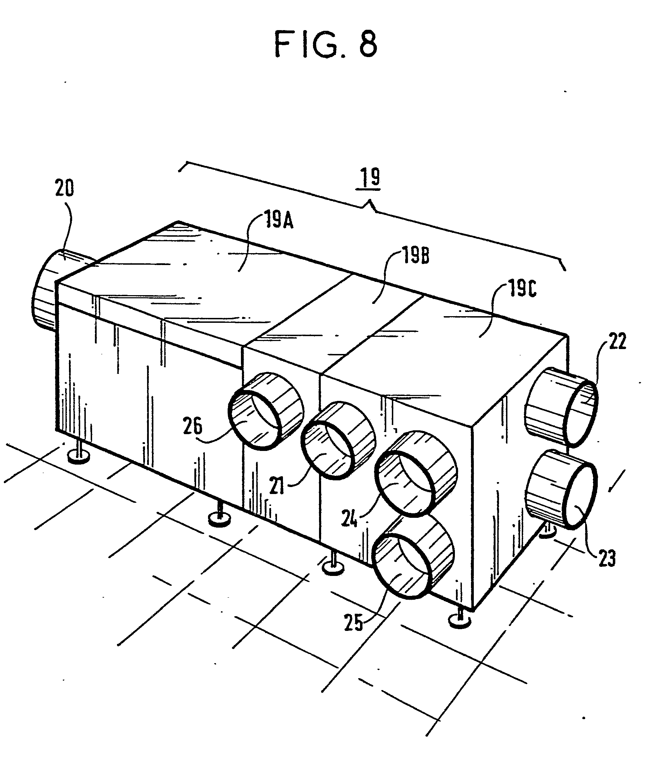

La figure 8 représente une vue schématique en perspective du dispositif de commutation et de répartition selon l'invention.

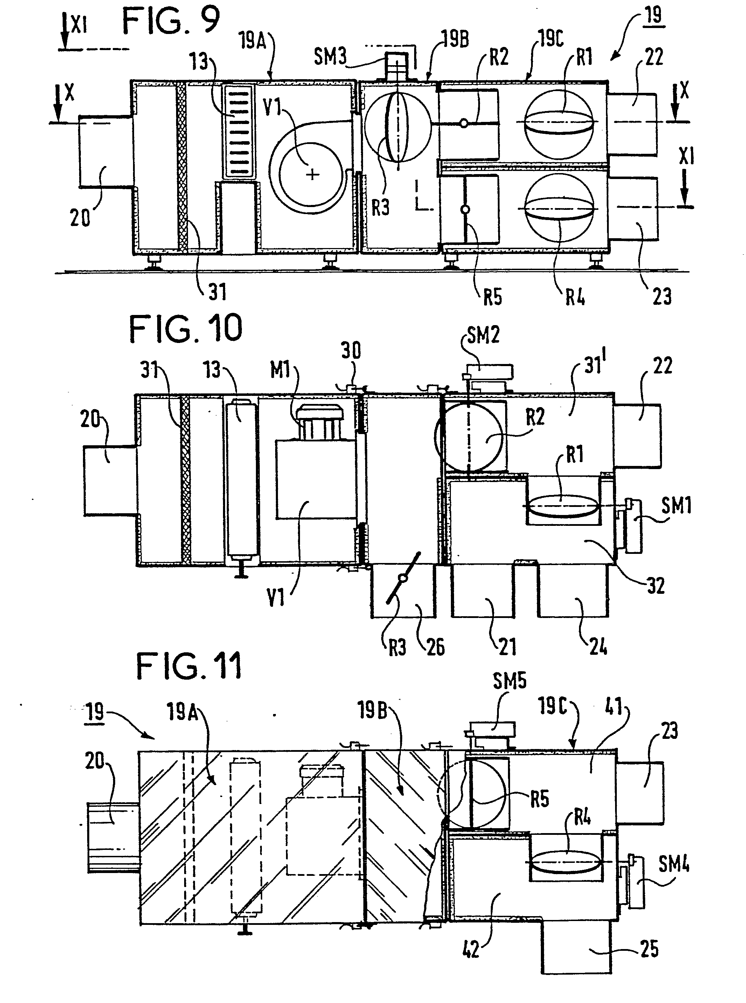

Il comprend un caisson 19, une entrée 20 et plusieurs viroles de sorties 21 à 26. Le caisson est fait de trois blocs 19A, 19B et 19C, assemblés au moyen de clips tel que 30 (figure 10) et ayant une face commune deux à deux.

Le bloc 19A comprend un filtre 31, un échangeur pour l'eau chaude sanitaire 13 et un ventilateur V1, mû par un moteur M1. Le bloc 19B comporte un compartiment unique avec une virole de sortie 26 obturable au moyen d'un registre R3 commandé par un servo-moteur SM3.

La sortie 26 est repérée par le même numéro de référence dans la figure 1 et relie le ventilateur V1 au dispositif de stockage 12.

De même la virole d'entrée 20 du caisson est repérée dans la figure 1, entre l'échangeur 13 et les capteurs 11.

Le bloc 19C comporte deux étages. L'étage supérieur comporte un compartiment 31' dont l'accès est commandé par un registre R2 actionné par un servomoteur SM2.

Le compartiment 31' possède une sortie 22. L'étage supérieur du bloc 19C comprend un compartiment 32 qui communique avec le compartiment 31 par un registre R1 commandé par un servo-moteur SM1.

Le compartiment 32 possède deux sorties 21 et 24.

La sortie 22 est reliée au volume 1 chauffé. La sortie 21 est reliée à l'échangeur 5. La sortie 24 est reliée au point commun à la serre et au dispositif de stockage (voir figure 1).

L'étage inférieur du bloc 19C à une configuration voisine de celle de l'étage supérieur.

Un compartiment 41 est obturable par un registre R5 actionné par un servomoteur SM5 et possède une sortie 23. Un compartiment 42, communique par un registre R4 actionné par un servomoteur SM4 avec le compartiment 41. Le compartiment 42 n'a qu'une sortie 25.

La sortie 23 est reliée aux capteurs 11, tandis que la sortie 25 est connectée à la serre 10.

Le caisson est réalisé en tôle d'acier galvanisé ou en tôle d'aluminium ou dans tous matériaux susceptible de lui assurer une résistance mécanique et une tenue à la corrosion et à la température suffisantes pour l'application envisagée.

L'ensemble du caisson est revêtu intérieurement d'un matelas isolant thermique et phonique.

Les divers servo-commandes des registres permettent de réaliser commodément les diverses configurations qui ont été représentées dans les figures 2 à 7, en effectuant les diverses commutations et répartitions des divers flux gazeux en présence.

En variante, le quatrième registre R4 est disposé sur la virole 20 venant des capteurs solaires.

REVENDICATIONS

1/ Dispositif pour la commutation et la répartition d'air dans une installation de climatisation et de chauffage d'eau sanitaire pour une habitation (1), ladite installation comprenant un groupe de capteurs solaires à air (11), une serre (10), un organe de stockage thermique (12) et un ventilateur (V1), reliés par une boucle de circulation d'air comportant cinq registres (R1, R2, R3, R4, R5) de commutation, caractérisé en ce que les cinq registres (R1, R2, R3, R4, R5), le ventilateur (V1) et un échangeur air/eau (13) sont disposés dans un caisson métallique (19) qui comporte en outre des viroles (21, 22, 23, 24, 25, 26) pour le raccordement aux équipements extérieurs.

2/ Dispositif selon la revendication 1, caractérisé en ce que le caisson (19) comprend un premier bloc (19A) comportant une entrée (20) reliée à la sortie des capteurs solaires (11) et, successivement un filtre (31), l'échangeur de chaleur air/eau (13) et le ventilateur (V1), ledit ventilateur refoulant dans une seconde partie du caisson comportant cinq compartiments (19B, 31, 32, 41, 42) et les cinq registres (R1, R2, R3, R4, R5).

3/ Dispositif selon la revendication 2, caractérisé en ce qu'un premier registre (R1) est disposé de manière à obturer la communication entre un premier compartiment (32) relié au côté froid de l'organe de stockage (12) par une première virole (24) et à l'entrée d'air de ventilation (21) et un deuxième compartiment (31') comprenant une seconde virole (22) reliée à l'habitation (1).

4/ Dispositif selon la revendication 3, caractérisé en ce qu'un second registre (R2) est disposé entre le deuxième compartiment (31') et le ventilateur (V1).

5/ Dispositif selon la revendication 4, caractérisé en ce qu'un troisième registre (R3) est disposé entre le ventilateur (V1) et une troisième virole (26) reliée au côté chaud de l'organe de stockage.

6/ Dispositif selon la revendication 5, caractérisé en ce qu'un quatrième registre (R4) est disposé entre un troisième compartiment (42) muni d'une quatrième virole (25) reliée à la serre et un quatrième compartiment (41) muni d'une cinquième virole (23) reliée à l'entrée des capteurs solaires (11).

7/ Dispositif selon la revendication 6, caractérisé en ce qu'un cinquième registre (R5) est disposé entre le ventilateur (V1) et le quatrième compartiment (41).

8/ Dispositif selon la revendication 6, caractérisé en ce que le quatrième registre (R4) est disposé sur la virole d'entrée (20) venant des capteurs solaires (11).

# FIG. 1

# FIG. 2

# FIG. 3

# FIG. 4

FIG. 5

# FIG. 6

FIG. 7

FIG. 8

FIG. 9

FIG. 10

FIG. 11

Office européen
des brevets

**RAPPORT DE RECHERCHE EUROPEENNE**

EP 81 10 7136

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| D | FR - A - 2 078 371 (KRUPP)<br>   * Page 3, lignes 26-28; page 4, figures 1-8 *<br><br>-- | 1,2 | F 24 F 13/00<br>        5/00 |
| | DE - A - 2 306 209 (MITTLMEIER)<br>   * Pages 7 et 8; figures 1-3 *<br><br>-- | 1,2 | |
| A | FR - A - 2 408 866 (TETA) | | |

**DOMAINES TECHNIQUES RECHERCHES (Int. Cl.³)**

| | | | |
|---|---|---|---|
| A | DE - A - 2 843 813 (LAROCHE) | | F 24 F |
| A | DE - A - 2 115 789 (GERLACH)<br><br>---- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 11-12-1981 | BURKHART |

OEB Form 1503.1  06.78